# EUROPEAN PATENT APPLICATION

(11) **EP 4 462 535 A2**
(43) Date of publication of application: **13.11.2024**
(21) Application number: 24175090.0
(22) Date of filing: 10.05.2024
(51) Int. Cl.: H01M 10/04, H01M 10/0587, H01M 50/107, H01M 50/538

(54) **ELECTRIC CELL AND BATTERY CONTAINING THE SAME**

(30) Priority: 12.05.2023 TW 112117721; 12.05.2023 TW 112204699 U
(71) Applicant: E-one Moli Energy Corp., 741 Tainan City (TW)
(72) Inventor: WENG, Aaron, 741 Tainan City (TW)
(74) Representative: Meissner Bolte Partnerschaft mbB

(57) **Abstract**

A structurally stable electric cell capable of significantly increasing the stability of a battery is provided. The electric cell is a winding formed by winding a laminated body including a positive electrode sheet, a negative electrode sheet, a separator, a positive electrode tab and a negative electrode tab. A surface of the negative electrode sheet is not provided with a negative electrode coating between a winding starting end and a predetermined length from the winding starting end, wherein a ratio of the predetermined length to a length of the negative electrode sheet ranges between 0.015 and 0.100.

## Description

### BACKGROUND OF THE INVENTION

### FIELD OF THE INVENTION

This application priority under 35 U.S.C. § 119 to Taiwanese Patent Application Nos. 112117721, filed May 12, 2023, and 112204699, filed May 12, 2023, the entireties of which are incorporated by reference herein.

The present invention relates to an electric cell and a battery containing the same, and more particularly to an electric cell capable of preventing structural deformation caused by thermal stress at high temperatures during charging/discharging, and a battery containing the same.

### DESCRIPTION OF THE PRIOR ART

Future electronic products are developed gradually in trends of high-capacity and high-voltage, and specification requirements of lithium batteries as power sources are also ever-increasing. However, as a capacity of an electric cell in a battery increases, safety requirements thereof are also elevated.

In technical means of the prior art, an electrolyte undergoes decomposition and oxidation reactions during charging/discharging of a battery to thereby generate a large amount of heat. If the heat energy is not timely suppressed, the accumulated heat energy causes a further temperature rise. When the temperature reaches a certain level, a certain thermal stress is produced to result in deformation of positive and negative electrode sheets in the battery. The deformation causes an electrode coating formed by an electrode slurry in the battery to peel off, leading to a drastic drop in the output efficiency of the battery or even a defect and hence a failure of the battery. Moreover, if charging/discharging of such defective battery persists, there is a risk of explosion and fire due to structural instability. Therefore, how to suppress deformation in a battery caused by a high-temperature thermal stress remains a main task to be resolved in the related industry of current lithium batteries.

In addition to the task above, a method of manufacturing a current lithium battery is as follows. First of all, a positive electrode sheet, a negative electrode sheet and a separator are stacked up, winding is performed by using a cylindrical body (for example, an iron rod) as a support of the winding to form an electric cell, and then the electric cell is placed into a battery can and electrically connected to positive and negative electrodes, eventually forming the lithium battery. However, the cylindrical body occupies a certain space and a certain weight in the battery, which disfavors the development of the battery toward trends of being light-weight and compact. Therefore, how to reduce the weight and space of a battery without affecting battery performance (for example, an electric capacity) is also one of the tasks to be resolved in the related industry of current lithium batteries.

### SUMMARY OF THE INVENTION

In view of the above, it is an object of the present invention to provide a battery for resolving the tasks above.

To achieve the object above, the present invention provides an electric cell, which is a winding formed by winding a laminated body. The laminated body includes: a positive electrode sheet, which is a positive electrode substrate having a positive electrode upper surface and a positive electrode lower surface opposite to the positive electrode upper surface, wherein at least one of the positive electrode upper surface and the positive electrode lower surface has a positive electrode coating; a negative electrode sheet, which is a negative electrode substrate having a negative electrode upper surface and a negative electrode lower surface opposite to the negative electrode upper surface, wherein at least one of the negative electrode upper surface and the negative electrode lower surface has a negative electrode coating, at least one of the negative electrode upper surface and the negative electrode lower surface is not provided with the negative electrode coating between a winding starting end of the negative electrode sheet and a predetermined length from the winding starting end, and a ratio of the predetermined length to a length of the negative electrode sheet ranges between 0.015 and 0.100; a separator, disposed between the positive electrode sheet and the negative electrode sheet; a positive electrode tab, connected to the positive electrode upper surface or the positive electrode lower surface; and a negative electrode tab, connected to the negative electrode upper surface or the negative electrode lower surface.

Preferably, at least one of the negative electrode upper surface and the negative electrode lower surface is not provided with a support member between the winding starting end and the predetermined length from the winding starting end. More preferably, neither the negative electrode upper surface nor the negative electrode lower surface is provided with the support member between the winding starting end and the predetermined length from the winding starting end.

Preferably, the ratio of the predetermined length to the length of the negative electrode sheet ranges between 0.017 and 0.093.

Preferably, neither the negative electrode upper surface nor the negative electrode lower surface is provided with the negative electrode coating between the winding starting end and the predetermined length from the winding starting end.

Preferably, the positive electrode tab includes a first positive electrode tab and a second positive electrode tab, and both of the first positive electrode tab and the second positive electrode tab are connected to the positive electrode upper surface.

Preferably, the negative electrode tab includes a first negative electrode tab, a second negative electrode tab and a third negative electrode tab, and all of the first negative electrode tab, the second negative positive electrode tab and the third negative electrode tab are connected to the negative electrode upper surface.

The present invention further provides a battery including: a housing, including a cover, a can, and an accommodating space formed by the cover and the can sealed and joined with each other; a positive electrode terminal, buried in the cover; a negative electrode terminal, buried in the can; and the electric cell described above, disposed in the accommodating space, the electric cell connected to the positive electrode terminal via the positive electrode tab and connected to the negative electrode terminal via the negative electrode tab.

Preferably, the battery further includes an electrolyte disposed in the accommodating space.

By increasing the ratio of an empty foil area (that is, a region not coated with the negative electrode coating formed by the negative electrode slurry) at the winding starting end of the negative electrode sheet in the negative electrode sheet, the present invention can alleviate the occurrence of stress concentration caused by heat in an inner coil of the electric cell, thereby preventing the electrode coating formed by the electrode slurry on the negative and positive electrode sheets from peeling off and hence from failures of the battery.

### BRIEF DESCRIPTION OF THE DRAWINGS

FIG. 1 is a side view of a laminated body before winding of an electric cell 100 according to an embodiment of the present invention;
FIG. 2 is an X-ray computed tomography of cross sections taken along different section lines I-I of an electric cell according to an embodiment of the present invention;
FIG. 3 is an X-ray computed tomography of cross sections taken along different section lines I-I of an electric cell of a comparison example;
FIG. 4 shows analysis results of values of central temperatures of individual electric cells, wherein (a) the predetermined length D in the electric cell is 16 mm; (b) the predetermined length D in the electric cell is 25 mm; and (c) the predetermined length D in the electric cell is 35 mm; and
FIG. 5 is a schematic diagram of a battery of the present invention.

### DETAILED DESCRIPTION OF THE EMBODIMENTS

The present invention provides an electric cell, which is a winding formed by winding a laminated body. The laminated body includes: a positive electrode sheet, which is a positive electrode substrate having a positive electrode upper surface and a positive electrode lower surface opposite to the positive electrode upper surface, wherein at least one of the positive electrode upper surface and the positive electrode lower surface has a positive electrode coating; a negative electrode sheet, which is a negative electrode substrate having a negative electrode upper surface and a negative electrode lower surface opposite to the negative electrode upper surface, wherein at least one of the negative electrode upper surface and the negative electrode lower surface has a negative electrode coating, at least one of the negative electrode upper surface and the negative electrode lower surface is not provided with the negative electrode coating between a winding starting end of the negative electrode sheet and a predetermined length from the winding starting end, and a ratio of the predetermined length to a length of the negative electrode sheet ranges between 0.015 and 0.100; a separator, disposed between the positive electrode sheet and the negative electrode sheet; a positive electrode tab, connected to the positive electrode upper surface or the positive electrode lower surface; and a negative electrode tab, connected to the negative electrode upper surface or the negative electrode lower surface.

The electric cell of the present invention can suppress deformation caused by thermal stress at high temperatures and enhance the stability of a battery, and is extremely suitable for a battery. Thus, the present invention further provides a battery. The battery includes: a housing, including a cover, a can, and an accommodating space formed by the cover and the can sealed and joined with each other; a positive electrode terminal, buried in the cover; a negative electrode terminal, buried in the can; and the electric cell described above, disposed in the accommodating space, the electric cell connected to the positive electrode terminal via the positive electrode tab and connected to the negative electrode terminal via the negative electrode tab.

Preferred embodiments are provided below as examples to describe the present invention, and are not to be construed as limitations to the scope of legal protection of the present invention.

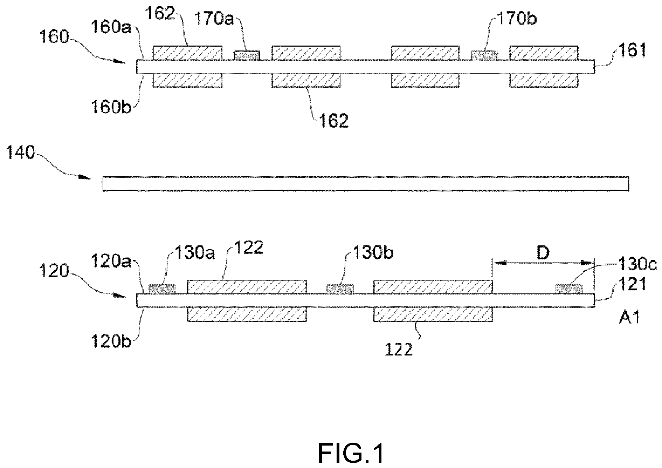

Refer to FIG. 1 showing a side view of a laminated body before winding of an electric cell 100 according to an embodiment of the present invention. In this embodiment, the laminated body includes a positive electrode sheet 160, a negative electrode sheet 120, a separator 140, a plurality of positive electrode tabs 170 and a plurality of negative electrode tabs 130. The separator 140 is disposed between the positive electrode sheet 160 and the negative electrode sheet 120, that is, the positive electrode sheet 160 and the negative electrode sheet 120 are opposite to each other across the separator 140.

The positive electrode sheet 160 is a positive electrode substrate 161. The positive electrode substrate 161 has a positive electrode upper surface 160a and a positive electrode lower surface 160b opposite to the positive electrode upper surface 160a, wherein at least one of the positive electrode upper surface 160a and the positive electrode lower surface 160b has a positive electrode coating 162. In this embodiment, both of the positive electrode upper surface 160a and the positive electrode lower surface 160b have the positive electrode coating 162 formed thereon, wherein the positive electrode coating 162 is formed by a positive electrode slurry.

In the present invention, the negative electrode sheet 120 is a negative electrode substrate 121. The negative electrode substrate 121 has a negative electrode upper surface 120a and a negative electrode lower surface 120b opposite to the negative electrode upper surface 120a, wherein at least one of the negative electrode upper surface 120a and the negative electrode lower surface 120b has a negative electrode coating 122. In this embodiment, both of the negative electrode upper surface 120a and the negative electrode lower surface 120b have the negative electrode coating 122 formed thereon, wherein the negative electrode coating 122 is formed by a negative electrode slurry.

At least one of the negative electrode upper surface 120a and the negative electrode lower surface 120b is not provided with the negative electrode coating between a winding starting end A1 and a predetermined length D from the winding starting end A1. In this embodiment, neither the negative electrode upper surface 120a nor the negative electrode lower surface 120b is provided with the negative electrode coating between the winding starting end A1 of the negative electrode sheet and the predetermined length D from the winding starting end A1. That is, a strip-like zone not coated with the negative electrode coating (since the negative electrode sheet is rectangular) is present between the winding starting end A1 of the negative electrode sheet and the predetermined length D from the winding starting end A1 on the negative electrode upper surface 120a and the negative electrode lower surface 120b. More specifically, lengths of both sides of the strip-like zone not coated with the negative electrode coating are sides of the winding starting end, and lengths of the other two sides are both D. In the present invention, a ratio of the predetermined length D to the length of the negative electrode sheet preferably ranges between 0.015 and 0.100, and is for example, 0.017, 0.024, 0.045, 0.055, 0.065, 0.070, 0.085 or 0.095. The ratio of the predetermined length D to the length of the negative electrode sheet more preferably ranges between 0.017 and 0.093, and is for example, between 0.022 and 0.090 or between 0.023 and 0.070, and even more preferably between 0.024 and 0.069. In this embodiment, the ratio of the predetermined length D to the length of the negative electrode sheet is 0.024 (that is, 35 mm/1455 mm). In another embodiment, the ratio of the predetermined length D to the length of the negative electrode sheet is 0.017 (that is, 25 mm/1455 mm).

As shown in FIG. 1, in this embodiment, within 35 mm counting from the winding starting end A1, neither the negative electrode upper surface 120a nor the negative electrode lower surface 120b of the negative electrode sheet is provided with a support member (for example, a cylindrical body). With this length, the laminated body of the present invention in the absence of a support member can be wound into a winding serving as an electric cell, and the battery of the present invention can be provided with a lighter weight. In the present invention, the cylindrical body can be a hollow cylindrical body, for example, an iron rod.

The laminated body of this embodiment includes a plurality of positive electrode tabs 170 and a plurality of negative electrode tabs 130. The plurality of positive electrode tabs 170 are connected to the surface of the positive electrode sheet, and the plurality of negative electrode tabs 130 are connected to the surface of the negative electrode sheet. In this embodiment, the electric cell includes two positive electrode tabs and three negative electrode tabs. For illustration purposes, the two positive electrode tabs are respectively referred to as a first positive electrode tab 170a and a second positive electrode tab 170b, and the three negative electrode tabs are respectively referred to as a first negative electrode tab 130a, a second negative electrode tab 130b and a third negative electrode tab 130c. In this embodiment, the first positive electrode tab 170a and the second positive electrode tab 170b are disposed on the positive electrode upper surface 160a, and are provided in a region that is not coated with the positive electrode coating; the first negative electrode tab 130a, the second negative electrode tab 130b and the third negative electrode tab 130c are disposed on the negative electrode upper surface 120a, and are provided in a region that is not coated with the negative electrode coating. In this embodiment, one end of each of the first positive electrode tab 170a and the second positive electrode tab 170b is connected to the positive electrode upper surface 160a, and the other end thereof extends outward and protrudes from one end of the winding so as to be later electrically connected to a positive electrode. One end of each of the first negative electrode tab 130a, the second negative electrode tab 130b and the third negative electrode tab 130c is connected to the negative electrode upper surface 120a, and the other end thereof extends outward and protrudes from the other end of the winding so as to be later electrically connected to a negative electrode. In some embodiments, the laminated body includes two positive electrode tabs and two negative electrode tabs. In the present invention, the positive electrode tabs and the negative electrode tabs can be different according to battery requirements or battery designs, and can have different numbers or configurations.

In some embodiments, the negative electrode tabs and the positive electrode tabs are respectively connected to the negative electrode sheet and the positive electrode sheet by welding. The welding is preferably ultrasonic welding. In the present invention, the negative electrode tabs can include copper foil, nickel foil or metal foil of a copper-nickel alloy, and the positive electrode tabs can include aluminum foil. In this embodiment, the negative electrode tabs are copper foil, and the positive electrode tabs are aluminum foil.

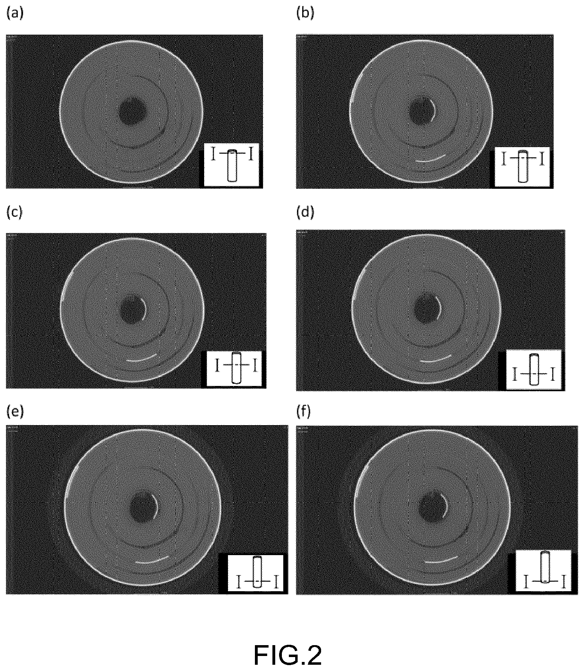

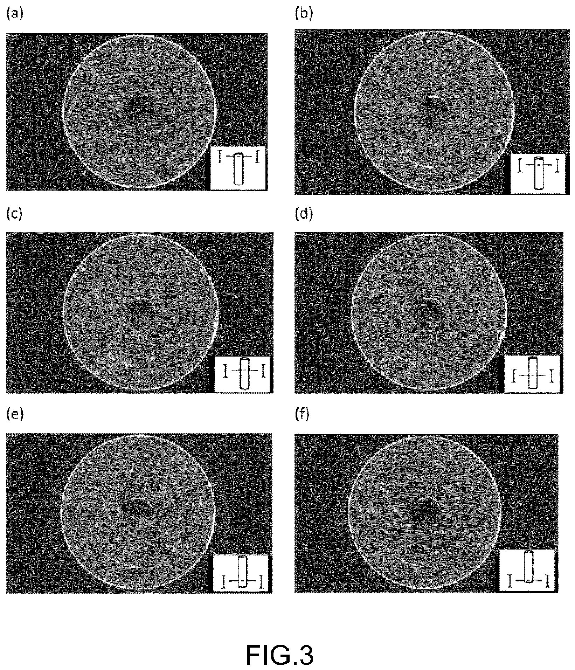

FIG. 2 shows an X-ray computed tomography of cross sections taken along different section lines I-I of the electric cell 100 according to an embodiment of the present invention. The ratio of the predetermined length D in the electric cell 100 to the length of the negative electrode sheet is 0.024 (that is, 35 mm/1455 mm), and the drawings on the lower right show positions of the section lines I-I relative to the winding. FIG. 2 is obtained by testing according to the test conditions of a charging/discharging rate (C-rate) of 1 C/100 W, a voltage of 2.65 V to 4.2 V, and a cut-off temperature in an end state of 95°C. FIG. 3 shows an X-ray computed tomography of cross sections taken along different section lines I-I of an electric cell of a comparison example. The ratio of the predetermined length D in the electric cell to the length of the negative electrode sheet is 0.011 (that is, 16 mm/1455 mm), and the drawings on the lower right show positions of the section lines I-I relative to the winding. FIG. 3 is obtained by testing according to the test conditions same as FIG. 2, that is, at a charging/discharging rate (C-rate) of 1 C/100 W, a voltage of 2.65 V to 4.2 V, and a cut-off temperature in an end state of 95°C. It is discovered from the results in FIG. 2 and FIG. 3 that, counting from the winding starting end, by enlarging a non-coated region of the negative electrode sheet (that is, by increasing the ratio of the non-coated region approximating to the end of the winding to the negative electrode sheet), a central temperature of the winding can be more quickly dissipated, accordingly resolving the issue of stress concentration in an inner coil of the electric cell caused by heat and preventing deformation or creasing of the electric cell, thereby enhancing the stability of the battery and prolonging the lifespan of the battery.

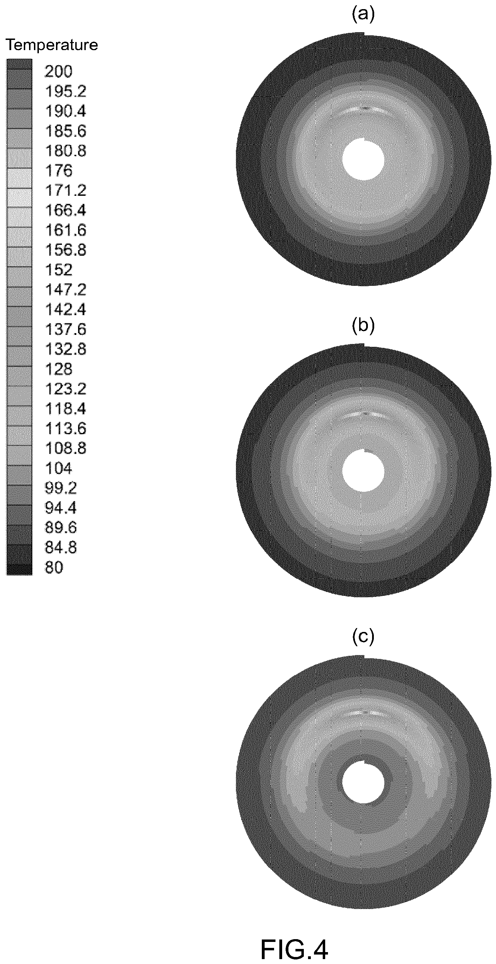

FIG. 4 shows analysis results of values and indicates central temperatures of electric cells, wherein (a) the ratio of the predetermined length D to the length of the negative electrode sheet is 0.011 (the comparison example); (b) the ratio of the predetermined length D to the length of the negative electrode sheet is 0.017; and (c) the ratio of the predetermined length D to the length of the negative electrode sheet is 0.024. As shown in FIG. 4, by increasing the ratio of the negative electrode coated region formed by a region not coated with the negative electrode slurry on the winding starting end of the electric cell of the present invention, the central temperature of the winding can be more quickly dissipated, hence reducing stress concentration and significantly enhancing the stability of the battery.

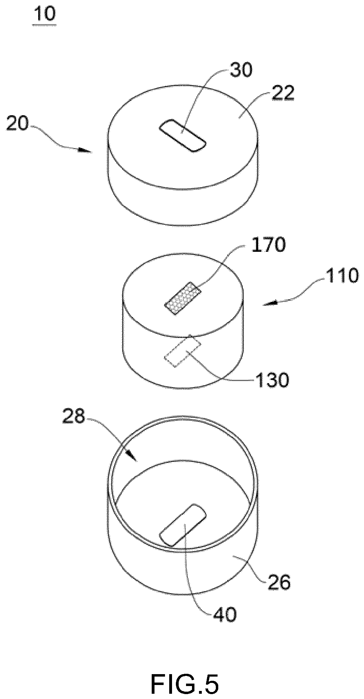

The present invention further provides a battery. Refer to FIG. 5 showing a schematic diagram of the battery of the present invention. In this embodiment, the battery is a cylindrical lithium battery 10. The cylindrical lithium battery 10 includes a housing 20, a positive electrode terminal 30, a negative electrode terminal 40 and an electric cell 110. The housing 20 includes a cover 22, a can 26, and an accommodating space 28 formed by the cover 22 and the can 26 sealed and joined with each other and communicated from top to bottom. The positive electrode terminal 30 is buried in the cover 22, the negative electrode terminal 40 is buried in the can 26, and the electric cell 110 is obtained by winding the laminated body described above from the winding starting end A1 as a starting point and is disposed in the accommodating space 28. The electric cell 110 is electrically connected to the positive electrode terminal 30 (not shown) via the positive electrode tab 170, and the electric cell 110 is electrically connected to the negative electrode terminal 40 (not shown) via the negative electrode tab 130.

In conclusion, by configuring the ratio of the non-coated region on the winding starting end on the negative electrode sheet to be within a predetermined range, the issues of stress concentration caused by heat of the electric cell can be effectively resolved without impairing the electric capacity, further significantly enhancing the stability of the battery. Moreover, the electric cell of the present invention does not require an additionally provided cylindrical body as a support member as that in the prior art. Thus, the weight and space of the battery can be reduced without affecting battery performance (for example, the electric capacity), hence achieving the object of being light-weight and thinned.

Although certain details are used to describe the present invention as above for better understanding, it shall be understood that certain changes and modifications may be implemented within the scope of the claims. Therefore, the embodiments above are intended for illustration purposes, and are not to be construed as limitations. Moreover, the present invention is not restrained by the details stated in the description, and modifications can be made without departing from the field of the appended claims or fields equivalent thereto.

## Claims

1. An electric cell, being a winding formed by winding a laminated body, the laminated body comprising:
a positive electrode sheet, being a positive electrode substrate, the positive electrode substrate having a positive electrode upper surface and a positive electrode lower surface opposite to the positive electrode upper surface, wherein at least one of the positive electrode upper surface and the positive electrode lower surface has a positive electrode coating;
a negative electrode sheet, being a negative electrode substrate having a negative electrode upper surface and a negative electrode lower surface opposite to the negative electrode upper surface, wherein at least one of the negative electrode upper surface and the negative electrode lower surface has a negative electrode coating, at least one of the negative electrode upper surface and the negative electrode lower surface is not provided with the negative electrode coating between a winding starting end of the negative electrode sheet and a predetermined length from the winding starting end, and a ratio of the predetermined length to a length of the negative electrode sheet ranges between 0.015 and 0.100;
a separator, disposed between the positive electrode sheet and the negative electrode sheet;
a positive electrode tab, connected to the positive electrode upper surface or the positive electrode lower surface; and
a negative electrode tab, connected to the negative electrode upper surface or the negative electrode lower surface.

2. The electric cell according to claim 1, wherein at least one of the negative electrode upper surface and the negative electrode lower surface is not provided with a support member between the winding starting end and the predetermined length from the winding starting end.

3. The electric cell according to claim 2, wherein neither the negative electrode upper surface nor the negative electrode lower surface is provided with the support member between the winding starting end and the predetermined length from the winding starting end.

4. The electric cell according to claim 1, wherein the ratio of the predetermined length to the length of the negative electrode sheet ranges between 0.017 and 0.093.

5. The electric cell according to claim 1, wherein neither the negative electrode upper surface nor the negative electrode lower surface is provided with the negative electrode coating between the winding starting end and the predetermined length from the winding starting end.

6. The electric cell according to claim 1, wherein the positive electrode tab comprises a first positive electrode tab and a second positive electrode tab, and both of the first positive electrode tab and the second positive electrode tab are connected to the positive electrode upper surface.

7. The electric cell according to claim 1, wherein the negative electrode tab comprises a first negative electrode tab, a second negative electrode tab and a third negative electrode tab, and all of the first negative electrode tab, the second negative electrode tab and the third negative electrode tab are connected to the negative electrode upper surface.

8. A battery, comprising:
a housing, comprising a cover, a can, and an accommodating space formed by the cover and the can sealed and joined with each other;
a positive electrode terminal, buried in the cover;
a negative electrode terminal, buried in the can; and
the electric cell according to claim 1, disposed in the accommodating space, the electric cell connected to the positive electrode terminal via the positive electrode tab and connected to the negative electrode terminal via the negative electrode tab.

9. The battery according to claim 8, further comprising an electrolyte disposed in the accommodating space.
